# EUROPEAN PATENT SPECIFICATION

(11) **EP 4 289 727 B1**
(45) Date of publication and mention of the grant of the patent: **21.10.2026**
(21) Application number: 22749665.0
(22) Date of filing: 31.01.2022
(51) Int. Cl.: B64C 27/08, B64C 39/02, B64D 17/04, B64D 17/80, B64D 25/00, B64U 20/30, B64U 70/83, B64U 70/87

(54) **SAFETY DEVICE AND FLIGHT VEHICLE**
SICHERHEITSVORRICHTUNG UND LUFTFAHRZEUG
DISPOSITIF DE SÉCURITÉ ET VÉHICULE DE VOL

(30) Priority: 02.02.2021 JP 2021015136
(43) Date of publication of application: 13.12.2023
(73) Proprietor: Daicel Corporation, Osaka 530-0011 (JP)
(72) Inventor: KATAYAMA, Kazuo, Tokyo 108-8230 (JP)
(74) Representative: Grünecker Patent- und Rechtsanwälte PartG mbB
(86) International application number: PCT/JP2022/003597
(87) International publication number: WO 2022/168793

(56) References cited:
- CN-U- 212 243 847
- JP-A- 2007 182 182
- JP-A- 2010 018 264
- JP-A- 2018 193 055
- JP-A- 2018 193 055
- JP-A- H0 415 499
- US-A- 3 079 113
- US-A1- 2003 197 095
- US-A1- 2003 197 095
- US-A1- 2018 009 540

## Description

### Technical Field

The present invention relates to a safety device and a flight vehicle.

### Background Art

In the related art, a safety device for a flight vehicle, which includes a safety mechanism, a drive mechanism, an ejection mechanism, and a control mechanism is proposed (Patent Document 1). Further, a small flight vehicle on which a parachute device as an auxiliary device of an airbag device can be mounted is proposed (Patent Document 2). Further, techniques for suppressing formation of dew condensation on the parachute and for opening the parachute more reliably are proposed (Patent Document 3). Further, techniques for stopping driving of a propeller of a drone and then ejecting a parachute or activating an airbag when a malfunction is detected by a malfunction detection unit is proposed (Patent Document 4).

In addition, JP 2018 193 055 A discloses a safety device including two parachutes which are connected to each other. US 2018/009540 A1 discloses a multi-modal aircraft recovery system. US 2003/197095 A1 discloses a steerable parachute control system.

### Citation List

### Patent Document

Patent Document 1: WO 2019/039062
Patent Document 2: JP 2018-34761 A
Patent Document 3: JP 2018-1814 A
Patent Document 4: JP 2018-154249 A

### Summary of Invention

### Technical Problem

If a parachute is opened at an early stage in the event of a fall of a flight vehicle, the flight vehicle may be swept by the wind and land at a location far off a planned flight route. In particular, in a case where an unmanned flight vehicle such as a so-called drone is piloted in urban areas, it is desirable to land the unmanned flight vehicle at a location as close as possible to the original flight route even in an emergency.

Thus, an object of the technology of the present disclosure is to provide a safety device that can control a landing point of a flight vehicle in the event of a crash.

### Solution to Problem

In order to solve the problem described above, a safety device for a flight vehicle according to claim 1 is provided. According to an embodiment of the present disclosure, a safety device is provided for a flight vehicle, and the safety device includes: a first parachute configured to reduce a falling velocity and control an attitude of the flight vehicle during falling; a second parachute configured to be opened later than the first parachute and to reduce an impact when the flight vehicle lands; a sensor portion configured to detect a fall of the flight vehicle; and a control unit configured to control opening of the first parachute and the second parachute. In addition, the control unit opens the first parachute at a first timing after the sensor portion detects the fall and opens the second parachute at a second timing after the first timing and when a predetermined condition is satisfied.

When the first parachute is opened, the falling velocity of the flight vehicle is reduced, and the attitude of the flight vehicle during falling is controlled. At this time, if the second parachute that is a main parachute configured to reduce an impact when the flight vehicle lands is opened, for example, the flight vehicle may be swept by a crosswind and land at a location far off the original flight path. As described above, if a landing point of the flight vehicle is controlled in the event of a crash in a manner that the second parachute is not opened until the predetermined condition is satisfied by the flight vehicle, the flight vehicle can land at a place not so far from the initial flight path. In other words, the landing point of the flight vehicle can be controlled in the event of the crash.

Further, a first pyrotechnic for ejecting the first parachute is further provided, and the control unit controls the first pyrotechnic to open the first parachute. Further, the flight vehicle may be a multicopter provided with a plurality of rotary blades, and the first parachute is ejected in a direction in which the first parachute does not interfere with the plurality of rotary blades. In this manner, the parachute can be reliably opened.

Further, the first parachute is connected to an umbrella top of the second parachute, a suppression unit for suppressing opening of the second parachute and a second pyrotechnic for releasing the second parachute suppressed by the suppression unit are provided, and the control unit controls the second pyrotechnic to open the second parachute. Further, the suppression unit includes a wire connected to the first parachute or the second parachute, and the second pyrotechnic is a wire cutter that ejects a projectile to cut the wire. For example, with such a configuration, the timing of opening the second parachute can be controlled.

Further, the predetermined condition may be set differently depending on a type of the flight vehicle. With such a configuration, the safety device can be easily applied to various flight vehicles.

Further, the sensor portion further measures an altitude of the flight vehicle, and the predetermined condition is that the altitude of the flight vehicle measured by the sensor portion is lower than a predetermined threshold. For example, the sensor portion can calculate the altitude from the atmospheric pressure.

Further, an alarm unit configured to emit sound or light when the sensor portion detects a fall. With such a configuration, a warning can be issued to the surroundings in the event of a fall of the flight vehicle.

Further, an airbag configured to be deployed at a predetermined timing when the sensor portion detects a fall may be provided. An impact on the flight vehicle or a structure or the like at a location near a landing point can be further suppressed by the airbag.

Further, a power supply unit configured to supply power to the sensor portion and the control unit may further be provided. With such a configuration, the safety device can operate independently in the event of an abnormality in the flight vehicle.

Further, a flight vehicle including the safety device described above can be provided.

### Advantageous Effects of Invention

According to the present disclosure, a safety device that can control a landing point of a flight vehicle in the event of a crash can be provided.

### Brief Description of Drawings

FIG. 1 is a view schematically illustrating an example of a safety device and a flight vehicle.
FIG. 2 is a functional block diagram illustrating an example of the safety device.
FIG. 3 is a diagram for describing the configuration of a first pyrotechnic, a first parachute, and a second parachute.
FIG. 4 is a diagram for describing the configuration of a second pyrotechnic, the first parachute, and the second parachute.
FIG. 5 is a diagram illustrating an example of how to fold a parachute.
FIG. 6 is a process flowchart describing the operation of the safety device.
FIG. 7 is a diagram for describing an altitude and elapsed time of the flight vehicle and an operation of the safety device.

### Description of Embodiments

Hereinafter, a safety device for a flight vehicle according to an embodiment of the present disclosure will be described with reference to the drawings. Note that each of the configurations, combinations thereof, and the like in the embodiment are an example, and various additions, omissions, substitutions, and other changes may be made as appropriate without departing from the spirit of the present disclosure. The present disclosure is not limited by the embodiment and is limited only by the claims.

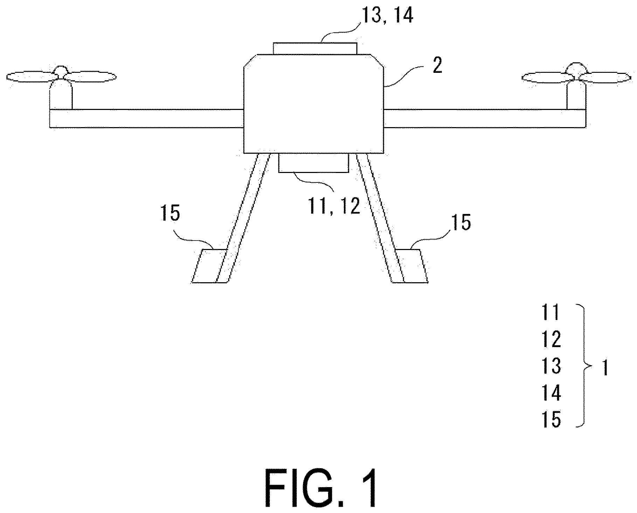

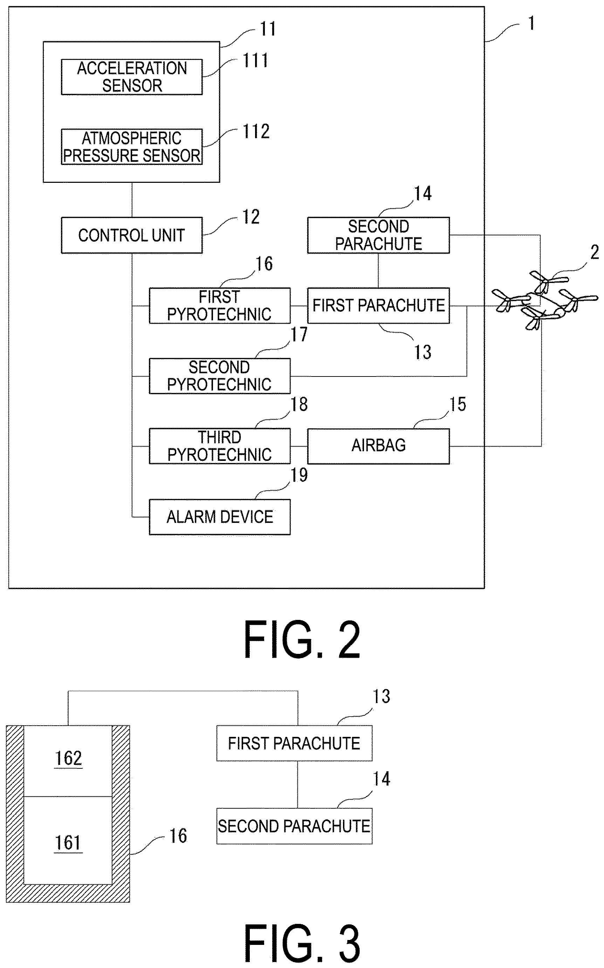

FIG. 1 is a view schematically illustrating an example of a safety device 1 and a flight vehicle 2. Further, FIG. 2 is a functional block diagram illustrating an example of the safety device 1. The safety device 1 according to the present embodiment detects a fall of the flight vehicle 2 and reduces, by using a parachute or the like, an impact on the flight vehicle 2 or a structure or the like at a location near a landing point at the time of landing or water landing. The flight vehicle 2 is an unmanned aerial vehicle (UAV) such as a so-called drone. The flight vehicle 2 may be, for example, a multicopter provided with a plurality of rotary blades. Further, the flight vehicle 2 may, for example, fly along a predetermined route to deliver a package, or may capture a moving image or a still image by a camera mounted thereon.

The safety device 1 includes a sensor unit 11, a control unit 12, a parachute storage that stores a first parachute 13 and a second parachute 14, an airbag 15, a first pyrotechnic 16 and a second pyrotechnic 17 that control opening of the parachutes, a third pyrotechnic 18 that controls deployment of the airbag 15, and an alarm device 19. The sensor unit 11 includes an acceleration sensor 111 for detecting a fall of the flight vehicle 2 and an atmospheric pressure sensor 112 for calculating the altitude of the flight vehicle 2. Further, the sensor unit 11 is mounted near the gravity center of the flight vehicle 2.

The control unit 12 is a processor such as a microcontroller, and is connected to the sensor unit 11, the pyrotechnics 16 to 18, and the alarm device 19 via signal lines. Then, the control unit 12 controls the safety device 1 based on an output of the sensor unit 11. Note that the control unit 12 may be provided in the sensor unit 11.

The first parachute 13 is a pilot chute, and the second parachute 14 is a main parachute. In other words, a parachute cord of the first parachute 13 is connected to an umbrella top of the second parachute 14, and the second parachute 14 is pulled out by air resistance force of the first parachute 13. However, in the present embodiment, a suppression unit for suppressing the opening of the second parachute 14 is provided, and each of the first parachute 13 and the second parachute 14 is configured to open at a timing according to the control by the control unit 12. Specifically, the first parachute 13 is connected, for example, to the parachute storage via a wire that functions as the suppression unit. Then, the wire suppresses the first parachute 13 from pulling out the second parachute 14 until the wire is cut.

Further, the airbag 15 is mounded at a lower portion of the flight vehicle 2 to reduce an impact at the time of landing or water landing. An airbag used in a known airbag device mounted on an automobile or the like can be used as the airbag 15. Note that it is preferable that the airbag 15 does not include a vent port for discharging gas to allow the flight vehicle 2 to float for a longer period of time upon water landing. Further, the shape of the airbag 15 after inflation and deployment is not particularly limited and can be appropriately selected in accordance with the structure and shape of the flight vehicle 2. For example, the airbag 15 may have a spherical shape, an oblate spherical shape (disk-like shape), a flat spherical shape having an elliptical shape in a plan view, a polyhedral shape, an oval shape, a rod shape, an inflatable ring shape, a boat shape, or a shape in which a plurality of these airbags are connected at one or a plurality of locations (for example, a shape like a catamaran or a trimaran of a yacht).

The first pyrotechnic 16 forms a gun slug that fires a weight connected to the umbrella top of the first parachute 13 from a cylindrical enclosure like a slug bullet by energy received from an igniter. FIG. 3 is a diagram for describing the configuration of the first pyrotechnic 16, the first parachute 13, and the second parachute 14. The first pyrotechnic 16 includes an igniter 161 and a weight 162 in the cylindrical enclosure. Further, the weight 162 is connected to the umbrella top of the folded first parachute 13. Then, when a resistor (not illustrated) is energized and the weight 162 is fired by gas pressure that is generated by ignition by the igniter 161, the first parachute 13 connected to the weight 162 is pulled out and opened. Note that the first pyrotechnic 16 is mounted on an upper portion of the flight vehicle 2, and the weight is ejected in a direction not interfering with rotary blades of the flight vehicle 2.

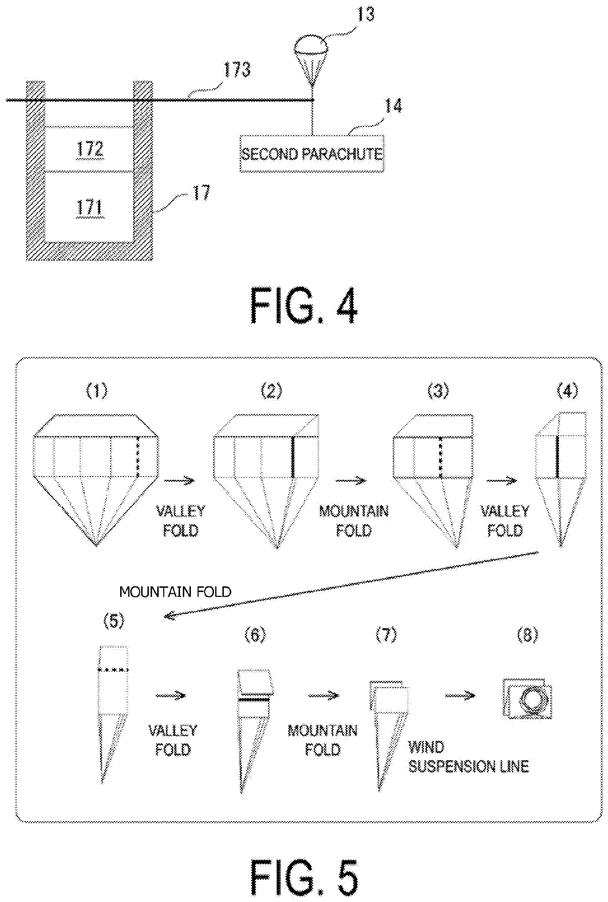

The second pyrotechnic 17 forms a wire cutter that cuts the aforementioned wire by actuating a piston held in a cylindrical enclosure by energy received from an igniter. FIG. 4 is a diagram for describing the configuration of the second pyrotechnic 17, the first parachute 13, and the second parachute 14. The second pyrotechnic 17 includes an igniter 171 and a piston 172 in the cylindrical enclosure. Further, a wire 173 is stretched in the moving direction of the piston 172. Further, the wire 173 is connected to the parachute cord of the first parachute 13 to prevent the first parachute 13 from pulling out the second parachute 14. In addition, a parachute cord of the first parachute 13 is connected to an umbrella top of the folded second parachute 14. Then, when a resistor (not illustrated) is energized and the piston 172 is moved by gas pressure that is generated by ignition by the igniter 171, the wire 173 is cut and the second parachute 14 connected to the first parachute 13 is pulled out and opened by air resistance force of the first parachute 13.

The third pyrotechnic 18 is also a gunpowder-type inflator (gas generator) including an igniter therein, and sends gas into the bag-shaped airbag 15 to inflate the airbag 15.

The alarm device 19 includes, for example, an LED or a speaker, and emits light or sound to notify the surroundings of a fall of the flight vehicle 2.

FIG. 5 is a diagram illustrating an example of how to fold the parachute. The shape of the canopy of the parachute is not particularly limited, and may be a hemispherical shape, a planar circular shape, a cross shape, a hexagonal shape, or the like. FIG. 5 (1) is a view of the canopy folded in two into a shape in a front view or a side view. In addition, as illustrated in (1) to (5) of FIG. 5, the canopy is divided into a plurality of equal parts (five equal parts in the example of FIG. 5) in the horizontal direction when the canopy is opened and is folded in a bellows shape. In other words, in (1) to (5), the canopy folded in two is combined, and valley folding and mountain folding are alternately repeated along the folding line along the vertical direction when the canopy is opened. In addition, as illustrated in (5) to (7) of FIG. 5, the canopy is divided into a plurality of equal parts (three equal parts in the example of FIG. 5) in the vertical direction when the canopy is opened and is folded in a bellows shape. In other words, in (5) to (7), valley folding and mountain folding are alternately repeated along the folding line along the horizontal direction when the canopy is opened. Finally, as illustrated in (7) to (8) of FIG. 5, a suspension line (line) is wound. The suspension line may be wound into, for example, a circle. The first parachute 13 and the second parachute 14 may be folded according to the procedure illustrated in FIG. 5, or may be folded in accordance with another existing method.

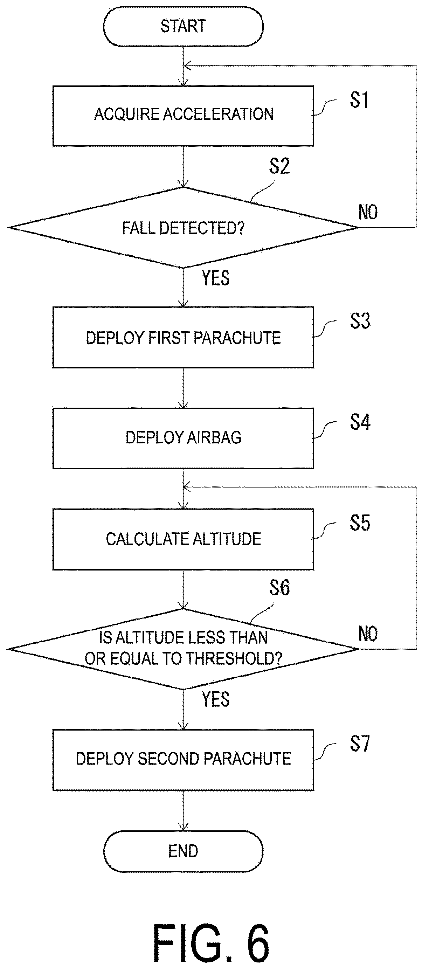

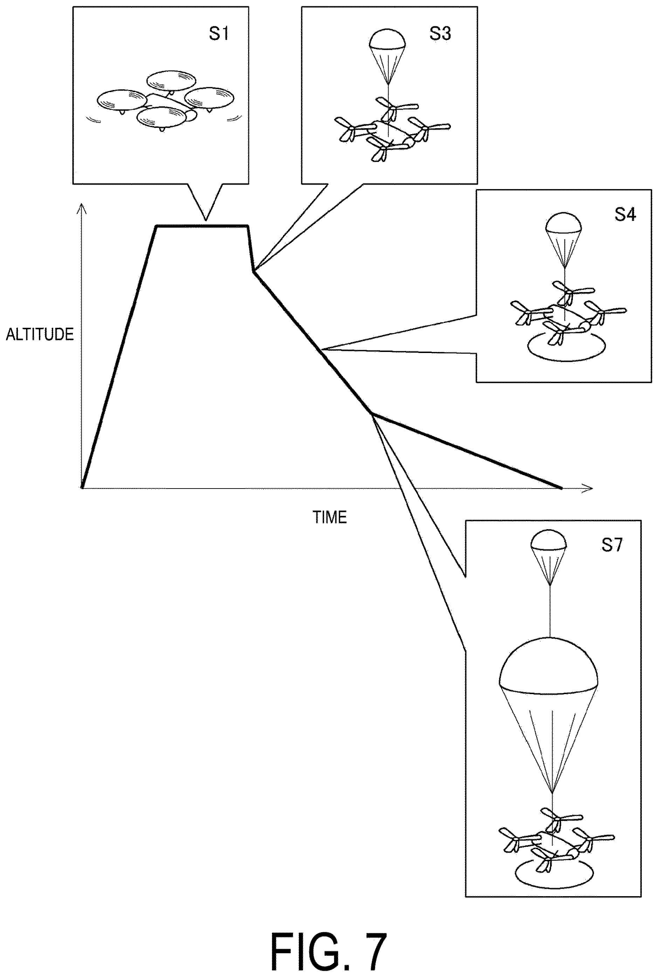

FIG. 6 is a process flow chart describing the operation of the safety device 1. Further, FIG. 7 is a diagram for describing the altitude and elapsed time of the flight vehicle 2 and the operation of the safety device 1. Note that the reference numerals illustrated in FIG. 7 correspond to those in the steps of FIG. 6. The processes illustrated in FIG. 6 are executed by the safety device 1 during the flight of the flight vehicle 2. Note that the safety device 1 includes a power supply unit (not illustrated) that supplies power to the sensor unit 11 and the control unit 12 described above, and operates independently from the flight vehicle 2. In other words, the safety device 1 can operate independently when a trouble occurs in the flight vehicle 2.

The control unit 12 of the safety device 1 acquires data output from the acceleration sensor 111 and indicating acceleration (FIG. 6: S1). The acceleration sensor 111 outputs observation values corresponding to the acceleration in each of three axial directions at predetermined intervals. On the other hand, the control unit 12 acquires the accelerations in the three axial directions and calculates the composite acceleration of the three axes. Note that the control unit 12 may calculate the composite acceleration by using a moving average of the acquired acceleration.

Further, the control unit 12 detects a fall of the flight vehicle 2 by using the acquired acceleration (FIG. 6: S2). In this step, the control unit 12 determines that the flight vehicle 2 is falling when data indicating the acceleration obtained in S1 indicates, for example, vertically downward acceleration equal to or greater than a predetermined threshold. When the control unit 12 does not detect a fall in S2 (S2: NO), the process returns to S1 and repeats the process in S1.

On the other hand, when the control unit 12 detects a fall in S2 (S2: YES), the control unit 12 activates the first pyrotechnic 16 to deploy the first parachute 13 (FIG. 6: S3). In this step, as described with reference to FIG. 3, the control unit 12 energizes the first pyrotechnic 16 to open the first parachute 13 connected to the weight 162 to be ejected. Further, after the control unit 12 detects the fall in S2, the control unit 12 may control the alarm device 19 to output light or sound.

Further, the control unit 12 activates the third pyrotechnic 18 at a predetermined timing to deploy the airbag 15 (FIG. 6: S4). In this step, the control unit 12 energizes the third pyrotechnic 18 to ignite the igniter to generate gas and inflate the airbag 15. Note that the timing at which the airbag 15 is deployed is not particularly limited as long as the timing is before the flight vehicle 2 lands. For example, the timing may be after a predetermined time from the process of the S3 or may be at the same time as S7 described below.

Further, the control unit 12 acquires the data output from the atmospheric pressure sensor 112 and indicating atmospheric pressure and calculates the altitude of the flight vehicle 2 (FIG. 6: S5). The atmospheric pressure sensor 112 outputs an observation value corresponding to the atmospheric pressure at a predetermined interval. On the other hand, the control unit 12 calculates the altitude of the flight vehicle 2 by using a known function that indicates the relationship between a measured value of the atmospheric pressure and the altitude. Note that, the control unit 12 may remove noise by using a moving average of the acquired atmospheric pressure. Further, the control unit 12 may estimate a value of the atmospheric pressure, for example, by using a Kalman filter.

Then, the control unit 12 determines whether the altitude is equal to or less than a predetermined threshold (FIG. 6: S6). In this step, the control unit 12 determines whether the altitude calculated in S5 is equal to or less than the predetermined threshold. When it is determined that the altitude is not equal to or less than the predetermined threshold in S6 (S6: NO), the process returns to S5 and repeats the process in S5.

On the other hand, when it is determined that the altitude is equal to or less than the predetermined threshold in S6 (S6: YES), the control unit 12 activates the second pyrotechnic 17 to deploy the second parachute 14 (FIG. 6: S7). In this step, as described with reference to FIG. 4, when the control unit 12 energizes the second pyrotechnic 17, and the piston 172 cuts the wire 173, the second parachute 14 is pulled out and opened by air resistance force of the first parachute 13.

### Effects

As illustrated in FIG. 7, when the first parachute 13 is opened in S3, the falling velocity of the flight vehicle 2 decreases and the attitude of the flight vehicle 2 during falling is controlled. In this case, if the second parachute 14 that is a main parachute is opened, for example, the flight vehicle 2 may be swept by a crosswind and land at a location far off the initial flight route. That is, the possibility of the falling flight vehicle 2 coming into contact with the surrounding buildings, electric wire, passersby, and the like is increased. In the present embodiment, since the second parachute 14 is not opened until the flight vehicle 2 descends to a predetermined altitude or lower, the landing point of the flight vehicle can be controlled in the event of a crash. In other words, by controlling the second parachute 14 to be opened at a timing different from that of the first parachute 13, the flight vehicle 2 can land at a place not so far from the initial flight path. Further, by deploying the second parachute 14 in S7, an impact at the time of landing of the flight vehicle 2 can be sufficiently reduced.

Thus, the safety device 1 according to the present embodiment enables the flight vehicle 2 to land at a position close to a flight route or a delivery route that is determined in advance, for example, by automatic control, and safety can be improved even in the event of a crash of the flight vehicle 2. Further, baggage carried by the flight vehicle and a device such as a camera mounted on the flight vehicle can be protected.

### Others

The safety device 1 described above can be mounted on various types of flight vehicles 2. Further, the aforementioned sequence control such as the timing of opening the second parachute 14 or the timing of deploying the airbag 15 based on the aforementioned altitude threshold may be applied in accordance with a type of the flight vehicle 2, for example, by defining preferable configurations in advance in accordance with a type of the flight vehicle 2.

While the embodiments and modifications of the current circuit breaker device according to the present disclosure have been described above, the embodiments and modifications described above can be combined to the extent possible. In addition, a portion of the configuration illustrated in FIG. 2, for example, the airbag 15, the alarm device 19, or the like can be deleted without departing from the scope of the present disclosure.

### Reference Signs List

1: Safety device
11: Sensor unit
111: Acceleration sensor
112: Atmospheric pressure sensor
12: Control unit
13: First parachute
14: Second parachute
15: Airbag
16: First pyrotechnic
161: Igniter
162: Weight
17: Second pyrotechnic
171: Igniter
172: Piston
173: Wire
18: Third pyrotechnic
19: Alarm device
2: Flight vehicle

## Claims

1. A safety device (1) for a flight vehicle (2), the safety device (1) comprising:
a first parachute (13) being in a shape of an umbrella and configured to reduce a falling velocity and control an attitude of the flight vehicle (2) during falling;
a second parachute (14) being in a shape of an umbrella and configured to be opened later than the first parachute (13) and to reduce an impact when the flight vehicle (2) lands, the first parachute (13) being connected to an umbrella top of the second parachute (14);
a sensor portion configured to detect a fall of the flight vehicle (2) and to measure an altitude of the flight vehicle (2); and
a control unit (12) configured to control opening of the first parachute (13) and the second parachute (14),
wherein the control unit (12) executes a first process including causing to open the first parachute (13) when the sensor portion detects the fall, and
a second process including causing to open the second parachute (14) when a predetermined condition is satisfied after the first process is executed, the predetermined condition is that the altitude of the flight vehicle measured by the sensor portion is lower than a predetermined threshold,
a first pyrotechnic (16), actuated by the control unit, that is configured to eject a weight connected to an umbrella top of the first parachute;
a suppression unit that suppresses deployment of the second parachute against an air resistance force of the first parachute, which has deployed prior to the second parachute;
a second pyrotechnic (17), actuated by the control unit, configured to release the suppression of deployment of the second parachute by the suppression unit;
the suppression unit including a wire (173) connected to the first parachute or the second parachute; and
the second pyrotechnic is a wire cutter that ejects a projectile to cut the wire.

2. The safety device (1) according to claim 1, wherein the flight vehicle (2) is a multicopter including a plurality of rotary blades, and
the first parachute (13) is ejected in a direction in which the first parachute (13) does not interfere with the plurality of rotary blades.

3. The safety device (1) according to claim 1 or 2, wherein the predetermined condition is configured to be set differently depending on a type of the flight vehicle (2).

4. The safety device (1) according to any one of claims 1 to 3, further comprising an alarm unit configured to emit sound or light when the sensor portion detects a fall.

5. The safety device (1) according to any one of claims 1 to 4, further comprising an airbag (15) configured to be deployed at a predetermined timing when the sensor portion detects a fall.

6. The safety device (1) according to claim 5, wherein the airbag (15) does not include a vent port configured to discharge gas.

7. The safety device (1) according to any one of claims 1 to 6, further comprising a power supply unit configured to supply power to the sensor portion and the control unit (12).

8. A flight vehicle (2) comprising the safety device (1) according to any one of claims 1 to 7.

## Patentansprüche

1. Eine Sicherheitsvorrichtung (1) für ein Luftfahrzeug (2), wobei die Sicherheitsvorrichtung (1) umfasst:
einen ersten Fallschirm (13) in Form eines Schirms, der so konfiguriert ist, dass er eine Fallgeschwindigkeit verringert und eine Lage des Luftfahrzeugs (2) während des Fallens steuert;
einen zweiten Fallschirm (14) in Form eines Schirms, der so konfiguriert ist, dass er später als der erste Fallschirm (13) geöffnet wird und einen Aufprall bei der Landung des Luftfahrzeugs (2) verringert, wobei der erste Fallschirm (13) mit einer Schirmspitze des zweiten Fallschirms (14) verbunden ist;
einen Sensorabschnitt, der so konfiguriert ist, dass er einen Fall des Luftfahrzeugs (2) detektiert und eine Höhe des Luftfahrzeugs (2) misst; und
eine Steuereinheit (12), die so konfiguriert ist, dass sie das Öffnen des ersten Fallschirms (13) und des zweiten Fallschirms (14) steuert,
wobei die Steuereinheit (12) einen ersten Prozess ausführt, der das Veranlassen des Öffnens des ersten Fallschirms (13) enthält, wenn der Sensorabschnitt den Fall detektiert, und
einen zweiten Prozess, der das Veranlassen des Öffnens des zweiten Fallschirms (14) enthält, wenn nach Ausführung des ersten Prozesses eine vorbestimmte Bedingung erfüllt ist; die vorbestimmte Bedingung darin besteht, dass die vom Sensorabschnitt gemessene Höhe des Luftfahrzeugs niedriger als ein vorbestimmter Schwellenwert ist,
eine erste Pyrotechnik (16), die von der Steuereinheit betätigt wird und dazu konfiguriert ist, ein mit einer Schirmspitze des ersten Fallschirms verbundenes Gewicht auszuwerfen;
eine Unterdrückungseinheit, die das Entfalten des zweiten Fallschirms gegen eine Luftwiderstandskraft des ersten Fallschirms unterdrückt, der sich vor dem zweiten Fallschirm entfaltet hat;
eine zweite Pyrotechnik (17), die von der Steuereinheit betätigt wird und dazu konfiguriert ist, die Unterdrückung des Entfaltens des zweiten Fallschirms durch die Unterdrückungseinheit freizugeben;
wobei die Unterdrückungseinheit einen Draht (173) enthält, der mit dem ersten Fallschirm oder dem zweiten Fallschirm verbunden ist; und
die zweite Pyrotechnik ein Drahtschneider ist, der ein Projektil ausstößt, um den Draht zu schneiden.

2. Die Sicherheitsvorrichtung (1) nach Anspruch 1, wobei das Luftfahrzeug (2) ein Multikopter ist, der eine Vielzahl von Rotorblättern enthält, und
der erste Fallschirm (13) in eine Richtung ausgeworfen wird, in der der erste Fallschirm (13) die Vielzahl von Rotorblättern nicht behindert.

3. Die Sicherheitsvorrichtung (1) nach Anspruch 1 oder 2, wobei die vorbestimmte Bedingung so konfiguriert ist, dass sie je nach Typ des Luftfahrzeugs (2) unterschiedlich eingestellt werden kann.

4. Die Sicherheitsvorrichtung (1) nach einem der Ansprüche 1 bis 3, die ferner eine Alarmeinheit umfasst, die so konfiguriert ist, dass sie einen Ton oder ein Licht emittiert, wenn der Sensorabschnitt einen Sturz detektiert.

5. Die Sicherheitsvorrichtung (1) nach einem der Ansprüche 1 bis 4, die ferner einen Airbag (15) umfasst, der so konfiguriert ist, dass er zu einem vorbestimmten Zeitpunkt entfaltet wird, wenn der Sensorabschnitt einen Fall detektiert.

6. Die Sicherheitsvorrichtung (1) nach Anspruch 5, wobei der Airbag (15) keine Entlüftungsöffnung aufweist, die zum Ablassen von Gas konfiguriert ist.

7. Die Sicherheitsvorrichtung (1) nach einem der Ansprüche 1 bis 6, die ferner eine Energieversorgungseinheit umfasst, die so konfiguriert ist, dass sie den Sensorabschnitt und die Steuereinheit (12) mit Energie versorgt.

8. Ein Luftfahrzeug (2), das die Sicherheitsvorrichtung (1) nach einem der Ansprüche 1 bis 7 umfasst.

## Revendications

1. Dispositif de sécurité (1) pour un véhicule aérien (2), le dispositif de sécurité (1) comprenant :
un premier parachute (13) ayant la forme d'un parapluie et configuré pour réduire la vitesse de chute et contrôler l'attitude du véhicule aérien (2) pendant la chute ;
un deuxième parachute (14) ayant la forme d'un parapluie et configuré pour s'ouvrir plus tard que le premier parachute (13) et pour réduire l'impact quand le véhicule aérien (2) atterrit, le premier parachute (13) étant connecté au sommet du parapluie du deuxième parachute (14) ;
une portion de capteur configurée pour détecter une chute du véhicule aérien (2) et pour mesurer l'altitude du véhicule aérien (2) ;
une unité de contrôle (12) configurée pour contrôler l'ouverture du premier parachute (13) et du deuxième parachute (14), dans lequel l'unité de contrôle (12) exécute un premier processus incluant une commande d'ouverture du premier parachute (13) quand la portion de capteur détecte la chute, et un deuxième processus incluant une commande d'ouverture du deuxième parachute (14) quand une condition prédéterminée est satisfaite après l'exécution du premier processus, la condition prédéterminée étant que l'altitude du véhicule aérien mesurée par la portion de capteur est inférieure à un seuil prédéterminé ;
un premier dispositif pyrotechnique (16) actionné par l'unité de contrôle, qui est configuré pour éjecter un poids connecté au sommet du parapluie du premier parachute ;
une unité de suppression qui retient le déploiement du deuxième parachute contre la force de résistance de l'air du premier parachute, qui s'est déployé avant le deuxième parachute ; et
un deuxième dispositif pyrotechnique (17) actionné par l'unité de contrôle, configuré pour annuler la suppression du déploiement du deuxième parachute par l'unité de suppression,
l'unité de suppression incluant un fil métallique (173) connecté au premier parachute ou au deuxième parachute ; et
le deuxième dispositif pyrotechnique étant un coupe-fil qui éjecte un projectile pour couper le fil métallique.

2. Dispositif de sécurité (1) selon la revendication 1, dans lequel
le véhicule aérien (2) est un multicoptère incluant une pluralité de pales rotatives, et
le premier parachute (13) est éjecté dans une direction où le premier parachute (13) n'interfère pas avec la pluralité de pales rotatives.

3. Dispositif de sécurité (1) selon la revendication 1 ou 2, dans lequel la condition prédéterminée est configurée pour être réglée différemment selon le type du véhicule aérien (2).

4. Dispositif de sécurité (1) selon l'une quelconque des revendications 1 à 3, comprenant en outre une unité d'alarme configurée pour émettre un son ou une lumière quand la portion de capteur détecte une chute.

5. Dispositif de sécurité (1) selon l'une quelconque des revendications 1 à 4, comprenant en outre un coussin gonflable (15) configuré pour être déployé à un moment prédéterminé quand la portion de capteur détecte une chute.

6. Dispositif de sécurité (1) selon la revendication 5, dans lequel le coussin gonflable (15) n'inclut pas un orifice de ventilation configuré pour évacuer le gaz.

7. Dispositif de sécurité (1) selon l'une quelconque des revendications 1 à 6, comprenant en outre une unité d'alimentation configurée pour alimenter la portion de capteur et l'unité de contrôle (12).

8. Véhicule aérien (2) comprenant le dispositif de sécurité (1) selon l'une quelconque des revendications 1 à 7.
